# EUROPÄISCHE PATENTSCHRIFT

(11) **EP 3 887 140 B1**
(45) Veröffentlichungstag und Bekanntmachung des Hinweises auf die Patenterteilung: **02.11.2022**
(21) Anmeldenummer: 19806281.2
(22) Anmeldetag: 26.11.2019
(51) Int. Cl.: B32B 3/26, B32B 5/02, B32B 5/32, B32B 7/02, B32B 15/082, B32B 15/20, B32B 27/12, B32B 27/30, B32B 27/32, B29C 70/08, B29D 99/00, B29C 70/70, B32B 5/18, B29C 70/88, B64C 1/06, B29L 31/30, B64D 11/00, B32B 5/24, B32B 7/12

(54) **SANDWICH-VERBUNDBAUTEIL FÜR FLUGZEUGINNENRÄUME**
SANDWICH-COMPOSITE COMPONENT FOR AIRCRAFT INTERIORS
COMPOSANT COMPOSITE EN SANDWICH POUR DES CABINES D'AVION

(30) Priorität: 26.11.2018 LU 101019
(43) Veröffentlichungstag der Anmeldung: 06.10.2021
(73) Patentinhaber: Euro-Composites S.A., 6401 Echternach (LU)
(72) Erfinder: ALTER, Rolf-Mathias, 6419 Echternach (LU); WINTGENS, Willy, 9907 Troisvierges (LU); KOCH, Frank, 54294 Trier (DE)
(74) Vertreter: Lippert Stachow Patentanwälte Rechtsanwälte
(86) Internationale Anmeldenummer: PCT/EP2019/082643
(87) Internationale Veröffentlichungsnummer: WO 2020/109342

(56) Entgegenhaltungen:
- EP-A1- 2 777 926
- WO-A1-2013/113734
- DE-A1- 3 625 534
- FR-A1- 2 560 953
- US-A- 5 806 796
- US-A1- 2009 025 873

## Beschreibung

Die Erfindung betrifft ein Sandwich-Verbundbauteil, insbesondere eine Verbundplatte, das für den Innenraum eines Flugzeugs, insbesondere eines Passagierflugzeugs, geeignet ist.

Sandwich-Verbundbauteile mit vorteilhaften primären Brandeigenschaften (wie z.B. Brennbarkeit, Entzündlichkeit, Flammenausbreitung) sind bspw. aus dem Gebäudebau bekannt. Als Beispiel offenbart die WO 2013/113734 A1 ein Sandwich-Verbundbauteil umfassend einen Schichtaufbau in Sandwichbauweise mit zwei Deckschichten, einer Kernschicht aus Polymerschaum und einer Glasfasermatte, die in den Polymerschaum eingebettet ist.

Ein weiteres Sandwich-Verbundbauteil mit vorteilhaften primären Brandeigenschaften für das Baugewerbe bzw. für den Gebäudebau ist aus der EP 2 777 926 A1 bekannt. Dieses umfasst einen Schichtaufbau in Sandwichbauweise (vgl. dort FIG.1) mit zwei Funktionsschichten aus Metall (A1, A2), einer Brandschutz-Schicht (B), einer isolierenden inneren Kernschicht aus Polymerschaum (D) und einer zusätzlichen Brandschutz-Schicht (C) umfassend einen Faserverbundwerkstoff mit dispergierten Kurzfasern, wobei die Schichten miteinander stoffschlüssig verklebt sind. Dieses Bauteil soll in einer Feuerwiderstandsprüfung für Gebäude (nach Norm EN1363-1) gute Ergebnisse erzielen.

Bekannte Sandwich-Verbundbauteile mit einem Schaumkern können bereits preiswert hergestellt werden und werden typisch im Gebäudebau bzw. im Baugewerbe verwendet. Sie sind jedoch für spezielle Anwendungen bzw. Anwendungen mit strengeren Anforderungen nur bedingt oder nicht geeignet.

Insbesondere in der Luftfahrt werden neben besonders günstigen primären Brandeigenschaften, z.T. auch noch deutlich strengere Anforderungen an die Brandnebenerscheinungen bzw. sekundären Brandeigenschaften, insbesondere die Rauchgasdichte und/oder Rauchgas-Toxizität, gestellt. Zudem gelten im Luftfahrtbereich ausgeprägte Anforderungen an geringes Flächengewicht bei dennoch hoher Festigkeit.

Hochwertige Wabenpaneele für Luftfahrt-Anwendungen, die für den Innenraum eines Passagierflugzeuges geeignet sind, sind bereits bekannt. Sie werden typisch in Sandwichbauweise hergestellt und beinhalten neben Faserverbund-Deckschichten bspw. phenolharzgetränkte Wabenstrukturen aus Aramid-Fasern als Kernschicht zur Gewichtsreduzierung.

Die DE 36 25 534 A1 offenbart ein solches Sandwichpaneel mit Wabenkern, das vor allem für Fußböden in Flugzeugen bestimmt ist. Hierzu wird ein Schichtaufbau in Sandwichbauweise vorgeschlagen mit zwei Deckschichten aus Faserverbund und einem Kern aus wabenförmigem Material, der zu beiden Seiten durch den Faserverbund abgedeckt ist. DE 36 25 534 A1 schlägt vor, eine vergleichsweise dünne Metallfolie, insbesondere Aluminiumfolie, als Isolierschicht zwischen zwei Teilschichten innerhalb der Deckschichten anzuordnen. Mit dieser Bauweise sollen gegenüber vorbekannten Konstruktionen Brennbarkeit, Rauchgasdichte und Giftigkeit der Rauchgase herabgesetzt werden.

Die Herstellung solcher Paneele mit Wabenkern ist jedoch technisch komplex und daher relativ kostenintensiv.

Eine Aufgabe der vorliegenden Erfindung ist es mithin, ein preiswert herstellbares Sandwich-Verbundbauteil vorzuschlagen, das für den Innenraum eines Flugzeugs, insbesondere eines Passagierflugzeuges geeignet ist.

Diese Aufgabe wird in einer einfachen Ausführungsform bereits durch ein Sandwich-Verbundbauteil mit den Merkmalen nach Anspruch 1 gelöst. Vorteilhafte Weiterbildungen ergeben sich aus den Unteransprüchen.

Das Sandwich-Verbundbauteil umfasst einen Schichtaufbau in Sandwichbauweise mit einer Kernschicht aus Polymerschaum, einer Verstärkungsschicht umfassend Faserverbundwerkstoff und weiterhin mindestens eine Funktionsschicht, wobei diese Schichten des Schichtaufbaus durch Klebeverbindung bzw. stoffschlüssig miteinander verbunden sind.

Erfindungsgemäß wird eine Kombination von Maßnahmen vorgesehen. Einerseits umfasst der Faserverbundwerkstoff der Verstärkungsschicht eine Polymermatrix, die eine höhere Massendichte aufweist als der Polymerschaum der Kernschicht. Andererseits umfasst die mindestens eine Funktionsschicht des erfindungsgemäßen Sandwich-Verbundbauteils eine verhältnismäßig dünne Metallfolie, insbesondere eine Aluminiumfolie. Bereits die Kombination dieser beiden im Nachhinein vermeintlich einfach erscheinenden Maßnahmen erlaubt es trotz preiswerter Herstellung mit einem Schaumkern sowohl die erforderlichen Brandeigenschaften, insbesondere sekundären Brandeigenschaften, als auch ein günstiges Verhältnis von Festigkeit zu Flächengewicht zu erzielen. Die Funktionsschicht kann dabei insbesondere eine geringere, vorzugsweise deutlich geringere, Schichtstärke aufweisen als die Verstärkungsschicht.

Der Faserverbundwerkstoff umfasst Verstärkungsfasern, insbesondere ein Gewebe oder ein Gelege aus geeigneten technischen Fasern, wobei die Verstärkungsfasern im fertigen Faserverbundwerkstoff in die Polymermatrix eingebettet sind.

Mit Massendichte der Polymermatrix ist hierbei die Massendichte der Matrix an sich ohne die Verstärkungsfasern des Faserverbunds bezeichnet. Diese Massendichte der Polymermatrix im fertigen Faserverbundwerkstoff kann z.B. durch Verbrennen einer Probe des Faserverbundwerkstoffs mit einem bestimmten Volumen und einem bestimmten Gewicht ermittelt werden (wobei die durch das Verbrennen erfolgte Gewichtsreduktion der Probe dem Gewicht der Matrix entspricht).

Das erfindungsgemäße Sandwich-Verbundbauteil für Luftfahrt-anwendungen weist ein besonders niedriges Flächengewicht auf, insbesondere < 2,5 kg/m², vorzugsweise < 2 kg/m², besonders bevorzugt < 1 kg/m², und bietet dennoch hohe Festigkeit. Die Festigkeit kann je nach Kundenanforderung durch die Zusammenstellung und die Schichtstärken, insbesondere der Verstärkungsschicht(en) flexibel angepasst bzw. eingestellt werden.

Das erfindungsgemäße Sandwich-Verbundbauteil kann somit insbesondere ein Flugzeuginnenraum-Verbundpaneel bzw. eine Flugzeuginnenraum-Verbundplatte sein oder hiervon einen Kernbestandteil darstellen.

Die Kernschicht aus Polymerschaum weist gute Isolierungseigenschaften, insbesondere Wärmeisolierungseigenschaften auf. Die Funktionsschicht aus Metallfolie ermöglicht es dabei, besonders preiswerte Kernschichten aus Polymerschaum zu verwenden.

Das Sandwich-Verbundbauteil kann insbesondere in der Form einer flachen Verbundplatte hergestellt bzw. planar ausgeführt sein. Das Sandwich-Verbundbauteil kann z.B. ein ebenes Paneel sein. Das Sandwich-Verbundbauteil kann jedoch auch nicht planeben sein, sondern z.B. eine vorgegebene Krümmung oder ggf. mehrere Krümmungen oder allgemein eine komplexere Geometrie aufweisen.

Die aneinander angrenzenden Schichten des Schichtaufbaus sind jeweils stoffschlüssig, d.h. insbesondere nicht zerstörungsfrei lösbar miteinander verbunden, insbesondere durch eine geeignete Klebeverbindung.

Die Kernschicht aus Polymerschaum kann insbesondere vorgefertigt sein und z.B. als handelsübliches Halbzeug dem Herstellungsprozess zugeführt werden.

Das Vorsehen mindestens einer Metallfolien-Schicht außenseitig zur Kernschicht aus Polymerschaum, jedoch bei ansonsten beliebiger Position im Schichtaufbau, kann insbesondere die Freisetzung von toxischen Stoffen wie Rauchgasen usw., die bei einem Brand oder starker Hitzeentwicklung der Kernschicht entweichen könnten, stark vermindern oder gänzlich verhindern.

Dank der Kombination aus einer kraftaufnehmenden Verstärkungsschicht, deren Zusammensetzung je nach Anwendung passend ausgewählt werden kann, und einer besonders hinsichtlich sekundärer Brandeigenschaften vorteilhaft wirkenden Metallfolie kann das erfindungsgemäße Sandwich-Verbundbauteil preiswert hergestellt werden und trotzdem für die strengeren Luftfahrtanforderungen bei Verwendung in einem Innenraum eines Passagierflugzeugs geeignet sein.

Die Funktionsschicht mit einer Metallfolie ermöglicht insbesondere überraschend gute Ergebnisse hinsichtlich der geltenden Rauchgas-Erfordernisse, die ansonsten mit typischen Schaumkernen nicht oder nur mit sehr aufwendigen Zusatzmaßnahmen zu erzielen wären.

Das erfindungsgemäße Sandwich-Verbundbauteil erfüllt insbesondere die Brandschutzanforderungen an Flugzeuginnenraum-Materialien hinsichtlich wunschgemäß geringen Entflammbarkeit, Rauchgasdichte und/oder Wärmefreisetzung gemäß EASA Spezifikation. Weiterhin kann das erfindungsgemäße Sandwich-Verbundbauteil selbstverlöschend ausgeführt sein. Die Wärmefreisetzung, die Wärmefreisetzungsrate und die Rauchgasdichte sind relevante Parameter für die Beurteilung der Reaktion der Bauteile auf hohe Temperaturen bzw. Feuer. Dabei gelten als Normvorschriften über die Bauartzulassung für Großflugzeuge die CS-25 der Europäischen Agentur für Flugsicherheit (EASA) , für große, turbinengetriebene Flugzeuge, oder Part 25 "Airworthiness Standards: Transport Category Airplanes" des US Departments of Transportation FAR (Federal Aviation Administration). Die europäische Norm entspricht weitestgehend der amerikanischen Norm und beschreibt Mindestanforderungen, die für die Zertifizierung eines Flugzeugs dieser Klasse erfüllt werden müssen. Das erfindungsgemäße Sandwich-Verbundbauteil kann neben der EASA Spezifikation gleichermaßen die Anforderungen der oben aufgeführten amerikanischen Vorschriften erfüllen. Paragraph 25.853 aus der EASA Norm CS-25 definiert dabei diverse brandschutztechnische Anforderungen an Innenraum-Materialien eines Flugzeugs, insbesondere bezüglich der Entflammbarkeit, Wärmefreisetzung, Wärmefreisetzungsrate und auch an die Rauchemissionseigenschaften. Ähnliche Anforderungen sind in den sog. Federal Aviation Regulations (FAR) durch die US-Amerikanische Luftfahrtbehörde formuliert.

Das erfindungsgemäße Sandwich-Verbundbauteil kann insbesondere die Anforderungen gemäß EASA Spezifikation CS 25.853 (d) bezüglich Wärmefreisetzung und Wärmefreisetzungsrate erfüllen, und weist vorzugsweise eine nach CS 25.853 (d) und Appendix F, Teil IV ermittelte Wärmefreisetzungsrate HRR ≤65 kW/m² und Wärmefreisetzung HR ≤65 kW*min/m² auf.

Das Sandwich-Verbundbauteil kann eine gemittelte Wärmefreisetzungsrate HRR ≤45 kW/m² und/oder eine gemittelte Wärmefreisetzung HR ≤40 kW*min/m² aufweisen, wobei die Wärmefreisetzungsrate und die Wärmefreisetzung nach CS 25.853 (d) und Appendix F, Teil IV ermittelt sind.

Bezüglich Rauch-Emissionseigenschaften kann das Sandwich-Verbundbauteil eine gemittelte spezifische optische Rauchgasdichte Ds < 100 nach 4 min. aufweisen, wobei die spezifisehe optische Rauchgasdichte Ds nach ASTM Testverfahren F814-83 ermittelt ist.

Geringe Rauchentwicklung ist von besonderer Bedeutung für Materialien, die in von Passagieren und/oder der Crew genutzten Innenraum-Bereichen eines Passagierflugzeugs eingesetzt werden. Rauchgasvergiftung stellt eine der häufigsten Todesursache bei Bränden dar.

Die erfindungsgemäß als Sandwich-Kern vorgeschlagenen Polymerschäume können aber Flammschutzmittel bzw. Brandhemmer, bspw. halogenhaltige Flammschutzmittel umfassen und/oder mit Flammschutzmittel bearbeitet sein. Die Flammschutzmittel einerseits erlauben es zwar, die geltenden Brandschutzanforderungen hinsichtlich der Entflammbarkeit zu erfüllen, andererseits tragen sie erheblich zur Rauchgasentwicklung und/oder damit korrelierender Rauchgastoxizität bei. Das erfindungsgemäße Vorsehen einer Metallfolien-Schicht außenseitig zur Kernschicht aus Polymerschaum kann die Freisetzung der etwaigen Rauchgase stark reduzieren oder verhindern, sodass die Brandschutzanforderungen an die Innenraum-Materialien auch hinsichtlich der Rauchgasdichte ebenfalls erfüllt werden.

Überraschenderweise ermöglicht bereits die Kombination aus einer Verstärkungsschicht, deren Polymermatrix eine höhere Massendichte als der Polymerschaum der Kernschicht aufweist, und einer Funktionsschicht aus einer Metallfolie, die vorzugsweise eine geringere Schichtstärke als die Verstärkungsschicht aufweist, das Erreichen der o.g. für die Luftfahrt erforderlichen Brandschutzeigenschaften bei gleichzeitiger Einhaltung der mechanischen Anforderungen (vgl. Verhältnis Festigkeit zu Flächengewicht).

Die Verstärkungsschicht kann zwischen der Funktionsschicht und der Kernschicht in dem Schichtaufbau angeordnet sein. Der Schichtaufbau kann zudem weitere Schichten zwischen der Funktionsschicht und der Kernschicht aufweisen. Es ist ebenfalls möglich, die Funktionsschicht unmittelbar an die Kernschicht angrenzend anzuordnen.

In einer Ausführungsform kann der Schichtaufbau ferner eine Trennschicht umfassend ein thermoplastisches Material aufweisen. Die Trennschicht kann eine Folie bspw. aus Polyester, Polycarbonat, Polyetherimid (PEI), Polyphenylsulfid (PPS), und/oder Polyetheretherketon (PEEK) sein. Dabei kann die Trennschicht insbesondere ein halogenhaltiges thermoplastisches Material umfassen, vorzugsweise eine Fluor-Kunststoff-Lage, besonders bevorzugt eine Lage aus Polyvinylfluorid. Eine derartige Trennschicht verbessert die Haftung zwischen der Funktionsschicht aus Metallfolie und der Verstärkungsschicht aus Faserverbundwerkstoff, die eine Polymermatrix mit besonders vorteilhaftem Brandverhalten aufweist, bspw. eine Phenolharz-Matrix. Im Zuge der Fertigung entstehen beim Aushärten der Phenolharz-Matrix Dämpfe, die das Anbinden der Verstärkungsschicht an die Funktionsschicht erschweren. Die Trennschicht kann die Störwirkung solcher Dämpfe effektiv blockieren und somit als eine Art Kompatibilitätsschicht wirken. Die Trennschicht kann somit die Herstellung des Sandwich-Verbundbauteils, bspw. in einer Heißpresse, vereinfachen bzw. die Klebeverbindung zwischen der Verstärkungsschicht und der Kernschicht verbessern. Das Vorsehen einer derartigen Trennschicht ist zudem auch für das Erzielen den für die Luftfahrt erforderlichen Brandeigenschaften vorteilhaft. Die Trennschicht aus bspw. einem halogenhaltigen Material weist an sich ein vorteilhaftes Brandverhalten auf. Die Trennschicht kann mit Flammschutzmittel bzw. Brandhemmer bearbeitet sein.

In einer Ausführungsform kann die Trennschicht zwischen der Verstärkungsschicht und der Funktionsschicht angeordnet sein. Die Trennschicht aus einem thermoplastischen Material kann ggf. auch als Deckschicht bzw. Dekorschicht für das Sandwich-Verbundbauteil verwendet werden.

Die Funktionsschicht aus Metallfolie kann insbesondere durch mindestens eine Klebelage, vorzugsweise einen Klebefilm, der mit der Trennschicht verbunden sein. Der Klebefilm kann thermoplastisch oder duroplastisch sein und/oder mit einem Flammschutzmittel bzw. einem Brandhemmer bearbeitet sein.

Die Funktionsschicht kann aus einer Metallfolie bestehen. Die Funktionsschicht kann insbesondere aus einer nichttragenden Metallfolie, insbesondere mit einer Stärke zwischen 7µm und 300 µm, vorzugsweise zwischen 7 und 100 µm, besonders bevorzugt zwischen 50 und 90 µm, bestehen. Bevorzugt wird als Metallfolie eine Aluminiumfolie verwendet, insbesondere eine Aluminiumfolie mit einer Beschichtung. Die Beschichtung kann anorganisch sein. Die Metallfolie kann eine Verbundfolie sein, die wiederum aus zwei oder mehreren einzelnen Schichten aufgebaut ist. Die Verbundfolie kann eine zumindest einseitige Beschichtung aufweisen, die Verklebung zu Matrixmaterialien erlaubt. Die Funktionsschicht kann zu günstigen Brandeigenschaften beitragen.

Die Funktionsschicht kann auch eine mechanisch stützende bzw. tragende Funktion haben. Die Funktionsschicht kann die Bruchfestigkeit erhöhen und die Durchbiegung des Sandwich-Verbundbauteils bei Biegebelastung insbesondere um ca. 10-30% reduzieren.

Vorzugsweise ist die Kernschicht als Hartschaum-Platte oder Hartintegralschaum-Platte vorgefertigt und in den Schichtaufbau integriert. Die Fertigung der Kernschicht kann unter Bedingungen durchgeführt werden, die speziell für das Aushärten des Schaums vorteilhaft sind und die sich von Bedingungen für die Herstellung weiterer bzw. der restlichen Schichten unterscheiden können. Dadurch kann im Schichtaufbau eine Kernschicht mit speziellen, erforderlichen Eigenschaften vorgesehen werden.

Die Hartschaum-Platte kann mit einem Haftvermittler bzw. Primer, der zur verbesserten Verbindung mit den benachbarten Schichten dient, beschichtet sein.

Die Kernschicht bzw. deren Polymerschaum kann Flammschutzmittel bzw. Brandhemmer umfassen, insbesondere halogenhaltige Flammschutzmittel auf Bromid- oder Chlorid-Basis, wie bspw. Pentabromdiphenylether, Tetrabrombisphenol A, oder HBCD (Hexabromcyclododecan). Weitere Flammschutzmittel bzw. Brandhemmer können z.B. Chlor- oder chlororganische Verbindungen, ATH, Magnesiumhydroxid und/oder Silicate umfassen. Auch phosphorhaltige Brandschutzmittel, wie z.B. Phosphor, Poly- und Pyrophosphate, Zinkphosphate, Phosphonate und/oder Phosphinate kommen in Betracht.

Die Kernschicht für sich genommen kann insbesondere eine Massendichte ≤400 kg/m³, insbesondere von 20 bis 300 kg/m³, vorzugsweise von 40 bis 150 kg/m³, besonders bevorzugt 40 bis 100 kg/m³, insbesondere von 40 bis 80 kg/m³ aufweisen.

In einer besonders bevorzugten Ausführungsform ist die Kernschicht aus Polyurethanschaum hergestellt, insbesondere PUR und/oder PIR. Polyurethanschaum weist niedrige Wärmeleitfähigkeit und besonders gute Wärmeisolationseigenschaften auf, insbesondere weil er Zellgase wie bspw. Kohlendioxid enthalten kann, die eine niedrigere Wärmeleitfähigkeit als Luft aufweisen. Ein Polyurethanschaum mit kleinem Porendurchmesser, kann einem Entweichen von Gasen oder Dämpfen entgegenwirken. Polyurethanschaum ist zudem besonders preiswert. Nicht nur aber insbesondere bei Polyurethanschaum kann ein Hartschaum oder Hartintegralschaum verwendet werden.

Alternativ oder ergänzend kann die Kernschicht unter Verwendung von einem PVC-, PET-, EPS-, PE- und/oder PMI-Schaum hergestellt sein. Auch diese Stoffe bzw. Schäume weisen je nach Zusammensetzung vorteilhafte Brandeigenschaften, insbesondere vorteilhafte primäre Brandeigenschaften auf. Die Kernschicht kann Blähglas oder Blähgraphit umfassen oder aus Blähglas oder Blähgraphit hergestellt sein.

Die Kernschicht kann beispielsweise auch aus einer Kombination zwei oder mehr Schäumen, vorzugsweise ausgewählt aus: Polyurethan-, insbesondere PUR und/oder PIR, und PVC-, PET-, EPS-, PE- und/oder PMI-Schaum hergestellt sein bzw. bestehen. Bevorzugt ist dabei eine Kombination, die Polyurethanschaum, insbesondere PUR- und/oder PIR-Schaum, umfasst.

Die Kernschicht kann ferner Füllstoffe umfassen. Die Dichte der Kernschicht kann z.B. durch geeignete Füllstoffe angepasst werden.

Der Schichtaufbau kann auf einer Seite der Kernschicht die mindestens eine Funktionsschicht als erste Funktionsschicht und vorzugsweise die Verstärkungsschicht als erste Verstärkungsschicht sowie auf der anderen Seite der Kernschicht eine zweite Funktionsschicht und vorzugsweise eine zweite Verstärkungsschicht aufweisen. Die erste und die zweite Funktionsschicht können dabei beide aus einer Aluminiumfolie bestehen. Die Aluminiumfolie kann eine geringere Schichtstärke aufweisen als die erste Verstärkungsschicht. Die erste und die zweite Verstärkungsschicht können vorzugsweise technisch identisch ausgeführt sein. Bevorzugt wird grundsätzlich ein in Bezug auf die Mittelebene der Kernschicht spiegelsymmetrischer Schichtaufbau verwendet.

In bevorzugter Ausführungsform ist auf jeder Seite der Kernschicht jeweils mindestens eine Funktionsschicht aus Metallfolie vorgesehen.

In einer weiteren Ausführungsform umfasst der Schichtaufbau auf mindestens einer Seite der Kernschicht mindestens zwei Funktionsschichten aus Metallfolie.

Die Verstärkungsschicht kann eine Matrix aus Phenol-Harz und/oder Benzoxazinharz, insbesondere auch aus anderen brandhemmend wirkenden oder brandhemmend eingestellten Harzen aufweisen. Diese Harze weisen vorteilhafte Brandeigenschaften auf. Die Matrix aus Benzoxazinharz ist besonders für höhere Einsatztemperaturen geeignet und weist hohe Feuerbeständigkeit auf. Benzoxazinharz härtet ohne Abspaltung flüchtiger Stoffe aus, sodass die Matrix die Anbindung an eine Metallfolie nicht stört und ggf. auch keine Trennschicht zum Blockieren flüchtiger Stoffe, z.B. während der Herstellung, erforderlich ist.

Alternativ oder ergänzend kann die Matrix der Verstärkungsschicht bspw. Polyesterharz, Cyanatesterharz, Epoxidharz, Furfurylharz und/oder einer Kombination dieser Harze umfassen.

Auch eine thermoplastische Matrix ist grundsätzlich für die Herstellung der Verstärkungsschicht denkbar.

Verschiedene Harzsysteme können in der Matrix der Verstärkungsschicht kombiniert werden. Die Matrix wiederum kann ebenfalls ein Flammschutzmittel bzw. einen Brandhemmer umfassen.

Vorzugsweise ist die Verstärkungsschicht aus einem Verbundwerkstoff mit Glasfasern hergestellt. Die Matrix der Verstärkungsschicht kann Phenolharz, Benzoxazinharz, Cyanatesterharz, Epoxydharz umfassend, oder aus einer Mischung aus einer Auswahl von diesen Harzen hergestellt sein. Glasfaserverstärkte Verbundwerkstoffe mit Phenolharz-Matrix z.B. sind besonders kostengünstig. Kohlenstofffaserverstärkte oder Basaltfaserverstärkte Verbundwerkstoffe sind jedoch ebenfalls als Verstärkungsschicht geeignet.

Vorzugsweise ist die Verstärkungsschicht aus einem vorgefertigten Prepreg bzw. textilen Faser-Matrix-Halbzeug, z.B. einem mit Harz pre-imprägnierten Gewebe oder Gelege, hergestellt. Prepregs sind besonders bei der Herstellung von größeren Stückzahlen technisch günstig, da sie kürzere Herstelldauer bzw. Taktzeiten ermöglichen, einfach in Handhabung und gut lagerbar sind. Das Prepreg kann eine Matrix umfassen aus Phenolharz, Benzoxazinharz, Cyanatesterharz-, Epoxydharz- oder aus einer Mischung von mindestens zwei dieser Harze. Vorzugsweise umfasst das Prepreg Glasfasern als Verstärkungsfasern, insbesondere ausschließlich Glasfasern. Es kann ggf. ein Hochtemperatur-Prepreg eingesetzt werden, das gewisse Zeit bei Raumtemperatur lagerfähig ist.

Die Stärke der Verstärkungsschicht kann spürbar größer als 150 µm, typisch größer als 300 µm, meist >0,5mm sein.

In einer Ausführungsform weist die Metallfolie, insbesondere Aluminiumfolie, der Funktionsschicht Perforationen auf. Die Perforationen sollten einen Durchmesser < 10 mm, bevorzugt < 2 mm, besonders bevorzugt < 1 mm aufweisen. Perforationen können die Herstellung erleichtern und zum Entlüften beim Auflegen der Folie dienen, sodass etwaige Luftpolster zwischen der Metallfolie und der Schicht, auf die sie aufgelegt wird, während der Herstellung des Sandwich-Verbundbauteils entweichen können. Vorzugsweise ist die Perforation gleichmäßig bzw. regelmäßig in beide Achsrichtungen über die Fläche verteilt. Die Perforation sollte nach einem im Verhältnis zum Durchmesser der Perforationen sehr grobmaschigen Rastermaß >>10mm vorgesehen sein, z.B. ein Raster von > 20 * 20 mm, insbesondere 50 * 50 mm bilden.

In einer besonders bevorzugten Ausführungsform des Sandwich-Verbundbauteils weist der Schichtaufbau folgende Schichtungsreihenfolge auf:
- eine erste Funktionsschicht aus Aluminiumfolie;
- eine Klebelage, vorzugsweise aus einem Duroplast;
- eine erste Trennschicht umfassend eine Thermoplast-Schicht, insbesondere eine Fluor-Kunststoff-Lage, vorzugsweise eine Lage aus Polyvinylfluorid;
- eine erste Verstärkungsschicht aus Faserverbundwerkstoff, insbesondere aus vorgefertigtem Prepreg;
- eine innenliegende Kernschicht aus Polymerschaum,
- eine zweite Verstärkungsschicht aus Faserverbundwerkstoff, insbesondere aus vorgefertigtem Prepreg;
- eine zweite Trennschicht umfassend eine Thermoplast-Schicht, insbesondere eine Fluor-Kunststoff-Lage, vorzugsweise eine Lage aus Polyvinylfluorid;
- eine Klebelage, vorzugsweise aus einem Duroplast;
- eine zweite Funktionsschicht aus Aluminiumfolie;
wobei diese Schichten des Schichtaufbaus in geeigneter Technik, insbesondere durch Klebeverbindung, stoffschlüssig miteinander verbunden sind. Das resultierende Sandwich-Verbundbauteil weist trotz hoher Festigkeit ein geringes Flächengewicht sowie vorteilhafte Brandeigenschaften bzw. Brandverhalten auf. Ein solches Sandwich-Verbundbauteil kann insbesondere die geltenden Brandschutzanforderungen an Innenraum-Materialien für Großraumflugzeuge zumindest erfüllen oder übertreffen. Ferner weist das Sandwich-Verbundbauteil vorteilhafte wärmeisolierende und schallisolierende Eigenschaften auf.

Weiterhin betrifft die Erfindung auch die Verwendung des Sandwich-Verbundbauteils im von Passagieren und/oder der Crew genutzten Innenraum-Bereich eines Passagierflugzeugs. Das Sandwich-Verbundbauteil kann insbesondere aufgrund seiner guten Isolationseigenschaften zum Aufbau von luftführenden Strukturen, z.B. für die Innenraum-Klimatisierung, in Luftfahrzeugen verwendet werden.

Weitere Einzelheiten, Merkmale und Vorteile der Erfindung sind - ohne Beschränkung der Allgemeinheit der o.g. Merkmale
- der nachfolgenden, ausführlicheren Beschreibung bevorzugter Ausführungsbeispiele anhand der beiliegenden Zeichnungen zu entnehmen. Diese zeigen, jeweils in schematischer Darstellung einen vertikalen Teilschnitt:
   - FIG.1:: einer ersten Ausführungsform des erfindungsgemäßen Sandwich-Verbundbauteils;
   - FIG.2:: einer zweiten Ausführungsform des erfindungsgemäßen Sandwich-Verbundbauteils;
   - FIG.3:: einer dritten Ausführungsform des erfindungsgemäßen Sandwich-Verbundbauteils;
   - FIG.4:: einer vierten Ausführungsform des erfindungsgemäßen Sandwich-Verbundbauteils;
   - FIG.5:: einer fünften Ausführungsform des erfindungsgemäßen Sandwich-Verbundbauteils; und
   - FIG.6:: einer sechsten Ausführungsform des erfindungsgemäßen Sandwich-Verbundbauteils.

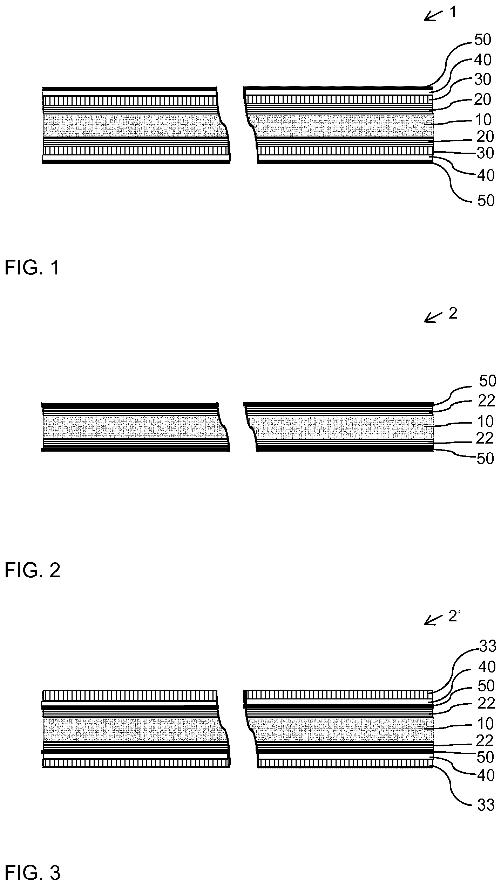

FIG. 1 zeigt eine schematische Ansicht einer ersten Ausführungsform des erfindungsgemäßen Sandwich-Verbundbauteils 1. Das dargestellte Sandwich-Verbundbauteil 1 ist ein flächiges Paneel mit einem im Querschnitt zur Mittelebene spiegelsymmetrischen Schichtaufbau. Der Schichtaufbau umfasst eine innenliegende Kernschicht 10, die zwischen zwei Verstärkungsschichten 20 angeordnet ist. An der Außenseite der jeweiligen Verstärkungsschicht 20 ist jeweils eine Trennschicht 30 angeordnet. Außenseitig an jeder Trennschicht 30 befinden sich eine Klebelage 40 und eine Funktionsschicht 50, wobei die Klebelage 40 die jeweilige Funktionsschicht 50 mit der angrenzenden Trennschicht 30 stoffschlüssig verbindet.

Die Kernschicht 10 ist in FIG.1 als eine vorgefertigte Hartschaumplatte aus Polyurethanschaum ausgeführt und weist vorzugsweise eine Massendichte von ca. 40 bis 80 kg/m³ auf. Die Hartschaumplatte kann beidseitig jeweils eine zusätzliche Lage aus Aluminiumfolie mit einer Stärke zwischen 50 µm und 90 µm aufweisen (nicht gezeigt). Die Kernschicht 10 hat eine deutlich größere Schichtstärke bzw. Wandstärke in Querrichtung als jede der anderen Schichten und hält insbesondere die beiden Verstärkungsschichten 20 nach dem Sandwichprinzip auf Abstand zueinander. Die Kernschicht kann bspw. die Schichtstärke von 10 mm aufweisen. Dank der Kernschicht 10 aus PU-Schaum ist das Sandwich-Verbundbauteil 1 zudem wärme- und schallisolierend.

Die beiden Verstärkungsschichten 20 sind technisch identisch ausgeführt und umfassen einen Glasfaserverbund mit Phenolharz-Matrix, wobei der Massenanteil der Matrix in dem Verbund z.B. etwa 50% beträgt. Die Stärke der Verstärkungsschichten 20 ist hier spürbar größer 150 µm, typisch größer als 300 µm, meist ≥0,5mm. Die Verstärkungsschichten 20 sind die mechanisch tragenden Schichten des Schichtaufbaus und sorgen für hohe Festigkeit des Sandwich-Verbundbauteils 1. Die Massendichte der Matrix per se kann in etwa 1200 kg/m³ betragen, und die Massendichte der Verstärkungsfasern per se in etwa 2400 kg/m³. Die kombinierte Massendichte des Verbundmaterials der Verstärkungsschicht 20 liegt zwischen beiden Werten und kann bei ca. 50% Massenanteil etwa 1800 kg/m³ betragen. Verstärkungsfasern niedriger Dichte, wie z.B. Carbon-, Baumwoll-, Viskose-, Thermoplast -, und/oder Hochleistungsthermoplast-Fasern können ebenfalls eingesetzt werden. Die kombinierte Massendichte des Verbundmaterials kann dabei geringer als 1800 kg/m³ sein.

Die beiden Trennschichten 30 sind ebenfalls technisch identisch ausgeführt und umfassen eine Folie aus Polyvinylfluorid. Das bevorzugte Produktbeispiel nach Tabelle 1 umfasst Tedlar^{®} TWH10BE 3 (Fa. DuPont, USA) als Polyvynylfluorid-Folie.

Die beiden brandschutzwirksamen Funktionsschichten 50 sind ebenfalls identisch ausgeführt und bestehen in FIG.1 aus einer Aluminiumfolie. Die Stärke der Aluminiumfolie liegt zwischen 7 µm und 90 µm, z.B. bei 50 µm. Als Aluminiumfolie wird bevorzugt eine Legierung aus der Reihe 5xxx nach EN 573-3/4, z.B. Legierung 5052, eingesetzt. Die Aluminiumfolie bzw. Funktionsschichten 50 weist zur Erleichterung der Herstellung ggf. Perforationen mit einem Durchmesser von <2 mm in einer Rasteranordnung mit einem quadratischen Rastermaß von ca. 20-25 mm auf. Die Aluminiumfolie der Funktionsschicht 50 ist im mechanischen Sinne nichttragend. Sie trägt überraschend wirksam zur Verbesserung der Eigenschaften des Sandwich-Verbundbauteils 1, insbesondere der sekundären Brandeigenschaften, im Brandfall bei. In FIG.1 stellt die Aluminiumfolie die äußere Schicht des Schichtaufbaus dar.

Die Schichten des Schichtaufbaus sind in an sich bekannter Weise miteinander verklebt, wobei z.B. Klebelagen 40 aus einem Thermoset-Harz bzw. Duroplast verwendet werden können.

Das Sandwich-Verbundbauteil 1 wird vorzugsweise kostengünstig durch ein geeignetes Press-Verfahren hergestellt, insbesondere durch Verpressen des Schichtaufbaus und Aushärten in Heißpresstechnik. Dieses Verfahren ist besonders vorteilhaft, wenn das Sandwich-Verbundbauteil 1 planar ist und vorgefertigte Verstärkungsschichten 20 in Form von Prepregs verwendet werden. Im Ausführungsbeispiel nach FIG.1 sind für die Herstellung der Verstärkungsschichten 20 Prepregs eingesetzt worden. Die Schichten des Schichtaufbaus werden in der obengenannten Reihenfolge abgelegt in eine Heißpresse eingebracht und hierin in einem Schritt miteinander verpresst und ausgehärtet. Die Prepreg-Schichten härten unter der Wärmeeinwirkung und verbinden sich mit dem angrenzenden Schaumkern 10 und der Polyvinylfluorid-Folie 30 stoffschlüssig. Die Klebelagen 40 härten ebenfalls verbinden die Polyvinylfluorid-Folie 30 mit der Aluminiumfolie 50. Der ggf. nur vorgehärtete Schichtaufbau kann durch eine Nachtemperung in einem Ofen bei einer Temperatur bis 250°C, bei der sowohl die Klebelage 40 als auch die Matrix der Verstärkungsschichten 20 vollständig ausgehärtet werden.

Es ist ebenfalls möglich, zuerst ein Laminat aus dem Prepreg der Verstärkungsschicht 20, der Polyvinylfluorid-Folie der Trennschicht 30, der Klebelage 40 und der Aluminiumfolie der Funktionsschicht 50 durch Heißpressen zu erstellen und im nächsten Schritt mit der Kernschicht 10, z.B. einer vorgefertigten Hartschaumplatte, zu verkleben.

Insbesondere für nichtplanare Bauteile kann eine vorgefertigte Hartschaumplatte der Kernschicht 10 in eine offene Form eingelegt, eine Glasfaserschicht auf die Hartschaumplatte aufgelegt und die Anordnung mit einer Polyvinylfluorid-Folie der Trennschicht 30 abgedeckt. Anschließend wird unter einer Folie Unterdruck erzeugt, z.B. etwa 75-90-prozentigem Vakuum. Eine Flüssigmatrix für die Verstärkungsschicht 20 kann dabei durch Harzinfusion zwischen die Trennschicht 30 und die Kernschicht 10 unter Vakuumeinwirkung eingebracht werden, sodass die Glasfaser mit dem Harz getränkt wird und überschüssiges Harz abgesaugt wird. Die Matrix kann unter Raumtemperatur an- oder aushärten. Bei Bedarf kann die Matrix der Verstärkungsschicht 20 durch eine anschließende Nachtemperung in einem Ofen bei höherer Temperatur, bis etwa 250°C, vollständig ausgehärtet werden. In einem weiteren alternativen Herstellungsverfahren kann zunächst die Verstärkungsschicht 20 in einer geschlossenen Form in einem Vakuuminjektionsverfahren oder im RTM-Verfahren hergestellt werden. Die Form kann im Ofen oder Autoklav erhitzt werden. Des Weiteren, kann die Verstärkungsschicht 20 auch durch Handlaminieren hergestellt werden.

Die in geeigneter Weise vorgefertigte Verstärkungsschicht 20 ggf. mit Trennschicht kann dann anschließend in geeigneter Technik mit einer vorgefertigten Kernschicht 10 und den Funktionsschichten 50 zum endfertigen Sandwich-Verbundbauteil 1 verbunden werden. Ein noch nicht vollständig ausgehärtetes Halbzeug umfassend den oben beschriebenen Schichtaufbau kann auch in eine gewünschte Form verbogen und ggf. durch Heißhärtungsverfahren ausgehärtet werden. Es kommt auf die Herstellungstechnik und die Reihenfolge der Schichtherstellung grundsätzlich nicht an.

Technische Daten zu einem Produktbeispiel sind nachfolgend tabellarisch entsprechend der Schichtreihenfolge angegeben:

**Tabelle 1 (technische Daten zu Produktbeispiel)**

| **Produktbeispiel: Sandwich-Verbundplatte für den Innenraum eines Passagierflugzeugs** | |
|---|---|
| **Schicht** | **Ausführung** |
| Funktionsschicht | Aluminiumfolie, Schichtstärke 50 µm, mit Perforation |
| Klebelage | Kleber auf Epoxy-Basis |
| Trennschicht | Polyvinylfluorid-Folie |
| Verstärkungsschicht | GFK: Glasfaserverbund mit Phenolharz-Matrix (Prepreg), etwa 50% Faseranteil, Schichtstärke 0,5 mm |
| Kernschicht | Hartschaumplatte aus PUR-Schaum, Schichtstärke 10 mm |
| Verstärkungsschicht | GFK: Glasfaserverbund mit Phenolharz-Matrix (Prepreg), etwa 50% Faseranteil, Schichtstärke 0,5 mm |
| Trennschicht | Polyvinylfluorid-Folie |
| Klebelage | Kleber auf Epoxy-Basis |
| Funktionsschicht | Aluminiumfolie, Schichtstärke 50 µm, mit Perforation |

Ein nach FIG.1 und mit den Daten nach Tabelle 1 fertiggestelltes Sandwich-Verbundbauteil 1 kann insbesondere die Brandschutzanforderungen an Flugzeuginnenraum-Materialien gemäß EASA Spezifikation CS 25.853 a, d, erfüllen bzw. übertreffen.

Versuche an einem nach FIG.1 und Tabelle 1 hergestellten Sandwich-Verbundbauteil 1 lieferten folgende Ergebnisse:
- das Sandwich-Verbundbauteil 1 weist eine Wärmefreisetzungsrate HRR von 39,9 kW*m⁻² und eine Wärmefreisetzung von 23,3 kW*min*m⁻² auf (ermittelt entsprechend der Vorgaben aus Appendix F, Teil IV der EASA Spezifikation CS 25) ;
- das Sandwich-Verbundbauteil 1 nach FIG.1 zeigt eine spezifische optische Rauchgasdichte Ds = 56 nach 4 min (ermittelt gemäß ASTM Testverfahren F814-83); und
- das Sandwich-Verbundbauteil 1 zeigt eine mittlere Nachbrennzeit von 3s nach Entfernen der Zündflamme, eine mittlere Länge der verkohlten Zone von 43 mm und eine bzw. keine mittlere Nachbrennzeit brennend abgefallener Tropfen von 0s (jeweils ermittelt entsprechend der Vorgaben von CS 25.853 a und Appendix F, Teil I der EASA Spezifikation einer vertikalen Testanordnung).

FIG.2 eine zweite mögliche Ausführungsform des erfindungsgemäßen Sandwich-Verbundbauteils 2. Der Schichtaufbau des dargestellten Sandwich-Verbundbauteils 2 umfasst im Unterschied zu dem Sandwich-Verbundbauteil 1 nach FIG.1 an jeder Seite der Kernschicht 10 aus Polyurethanschaum jeweils eine Verstärkungsschicht 22 aus Benzoxazinharz-Glasfaserverbund auf. Direkt an der Außenseite der jeweiligen Verstärkungsschicht 22 ist jeweils eine Funktionsschicht 50 aus Aluminiumfolie angeordnet. Die Matrix der Verstärkungsschicht 22 verbindet die Verstärkungsschicht 22 mit der Kernschicht 10 und mit der Funktionsschicht 50 stoffschlüssig. Das Sandwich-Verbundbauteil 2 bedarf keiner Trennschichten bzw. zusätzlichen Klebelagen, da die Benzoxazinharz-Matrix direkt mit der Aluminiumfolie verbunden werden kann. Das Sandwich-Verbundbauteil kann jedoch alternativ auch eine Fluor-Kunststoff-Lage als die obere Dekorschicht 33 aufweisen, die durch eine Klebelage 40 aus einem Thermoset an die Aluminiumfolie angebunden ist, wie die Variante des Sandwich-Verbundbauteils 2' in FIG.3 zeigt.

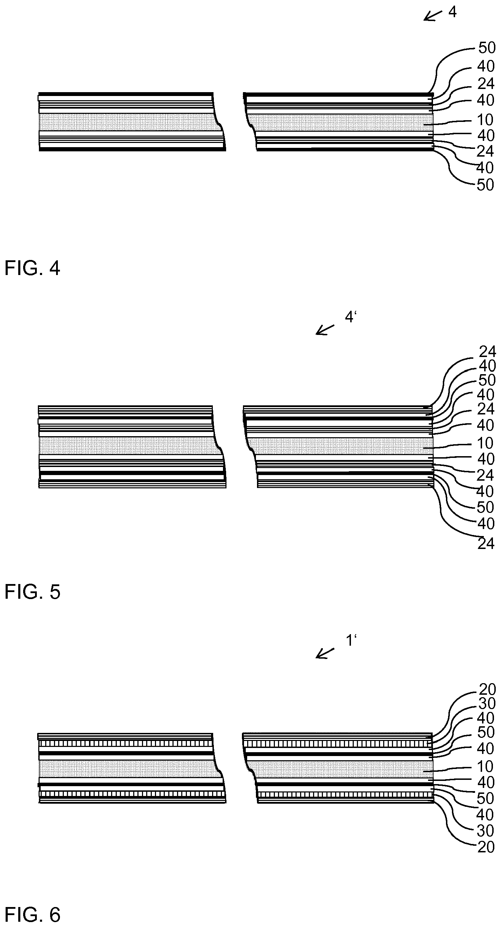

FIG. 4 zeigt ein erfindungsgemäßes Sandwich-Verbundbauteil 4 schematische als weitere mögliche Ausführungsform. Der Schichtaufbau dieses Sandwich-Verbundbauteils 4 wurde, im Unterschied zu dem Sandwich-Verbundbauteil 1 nach FIG.1, mit einer Verstärkungsschicht 24 in Form eines Laminats aufgebaut. Jeweils eine Verstärkungsschicht 24 aus Phenolharz-Glasfaserverbund-Laminat wurde an jeder Seite der Kernschicht 10 aus Polyurethanschaum eingebunden, d.h. ein vollständig ausgehärtetes und nicht mehr reaktionsfähiges Laminat aus Phenolharz-Glasfaserverbund wurde in den Schichtaufbau integriert. Weil das Phenolharz im Laminat vor Aufnahme in den Schichtaufbau vollständig ausgehärtet ist wird das Laminat mittels einer Klebelage 40, z.B. aus Thermoset, an den beiden Seiten der Kernschicht 10 angeklebt. An der Außenseite der jeweiligen Verstärkungsschicht 24 wurde jeweils eine Funktionsschicht 50 aus Aluminiumfolie jeweils durch eine weitere Klebelage 40, z.B. aus Thermoset, mit dem Aufbau verbunden. Diese Variante des Sandwich-Verbundbauteils 4 bedarf keiner Trennschichten. Je nach dem Material der Klebelage kann der Schichtaufbau bei Raumtemperatur oder bei einer höheren Temperatur ausgehärtet werden.

FIG. 5 zeigt eine Abwandlung mit einem Sandwich-Verbundbauteil 4', wobei zusätzlich zum Schichtaufbau nach FIG.4, außenseitig jeweils eine weitere Verstärkungsschicht 24 aus dem Phenolharz-Glasfaserverbund-Laminat durch jeweils eine weitere Klebelage 40 an beiden Seiten angebracht ist.

FIG.6 zeigt als Variante ein Sandwich-Verbundbauteil 1', wobei die Funktionsschicht 50 aus Aluminiumfolie an beiden Seiten der im Querschnitt des Sandwich-Verbundbauteils 1' zentral liegenden Hartschaum-Kernschicht 10 durch Klebelagen 40 aus einem Thermoset direkt auf die Kernschicht 10 angebracht wurde. Ferner ist jeweils eine Trennschicht 30 aus einem thermoplastischen Kunststoff jeweils durch eine Klebelage 40 außenseitig der jeweiligen Funktionsschicht 50 angebunden. Beidseitig außen auf der jeweiligen Trennschicht 30 wurde jeweils eine Verstärkungsschicht 20 aus Phenolharz-Glasfaserverbund-Prepreg angeordnet. Auch dieser Schichtaufbau des Sandwich-Verbundbauteils 1' nach FIG.6 kann in einer Heißpresse verpresst werden, um die Matrix der Verstärkungsschicht 20 und der Klebelagen 40 auszuhärten.

### Bezugszeichenliste

### FIG. 1, FIG.6:

- 1; 1': Sandwich-Verbundbauteil
- 10: Kernschicht
- 20: Verstärkungsschicht
- 30: Trennschicht
- 40: Klebelage
- 50: Funktionsschicht

### FIG. 2, FIG.3:

- 2, 2': Sandwich-Verbundbauteil
- 10: Kernschicht
- 22: Verstärkungsschicht
- 50: Funktionsschicht
- 40: Klebelage
- 33: Dekorschicht

### FIG. 4, FIG.5:

- 4; 4': Sandwich-Verbundbauteil
- 10: Kernschicht
- 24: Verstärkungsschicht
- 40: Klebelage
- 50: Funktionsschicht

## Patentansprüche

1. Sandwich-Verbundbauteil (1), insbesondere Verbundplatte, für den Innenraum eines Passagierflugzeugs, umfassend einen Schichtaufbau in Sandwichbauweise
- mit einer Kernschicht (10) aus Polymerschaum;
- mit einer Verstärkungsschicht (20) umfassend Faserverbundwerkstoff; und weiterhin
- mit mindestens einer Funktionsschicht (50);
wobei diese Schichten des Schichtaufbaus stoffschlüssig, insbesondere durch Klebeverbindung, miteinander verbunden sind; **dadurch gekennzeichnet, dass**
der Faserverbundwerkstoff der Verstärkungsschicht (20) ein Gewebe aus Fasern oder ein Gelege aus Fasern umfasst und dass der Faserverbundwerkstoff der Verstärkungsschicht (20) eine Polymermatrix umfasst, die eine höhere Massendichte als der Polymerschaum der Kernschicht (10) aufweist, und
dass die mindestens eine Funktionsschicht (50) eine Metallfolie, vorzugsweise eine Aluminiumfolie, umfasst, die eine geringere Schichtstärke aufweist als die Verstärkungsschicht (20) .

2. Sandwich-Verbundbauteil (1) nach Anspruch 1, **dadurch gekennzeichnet, dass** das Sandwich-Verbundbauteil (1) hinsichtlich Entflammbarkeit, Rauchgasdichte und/oder Wärmefreisetzung die Brandschutzanforderungen an Flugzeuginnenraum-Materialien gemäß EASA Spezifikation erfüllt.

3. Sandwich-Verbundbauteil (1) nach Anspruch 1 oder 2, **dadurch gekennzeichnet, dass** das Sandwich-Verbundbauteil (1) bezüglich Wärmefreisetzung und Wärmefreisetzungsrate die Anforderungen gemäß EASA Spezifikation CS 25.853 (d) erfüllt, und insbesondere eine nach CS 25.853 (d) und Appendix F, Teil IV ermittelte Wärmefreisetzungsrate HRR ≤65 kW/m² und Wärmefreisetzung HR ≤65 kW*min/m² aufweist, wobei das Sandwich-Verbundbauteil (1), nach CS 25.853 (d) und Appendix F, Teil IV ermittelt, besonders bevorzugt eine gemittelte Wärmefreisetzungsrate HRR ≤45 kW/m² und/oder besonders bevorzugt eine gemittelte Wärmefreisetzung HR ≤40 kW*min/m² aufweist.

4. Sandwich-Verbundbauteil (1) nach einem der Ansprüche 1 bis 3, **dadurch gekennzeichnet, dass** das Sandwich-Verbundbauteil (1) bezüglich Rauch-Emissionseigenschaften, nach ASTM Testverfahren F814-83 ermittelt, eine gemittelte spezifische optische Rauchgasdichte Ds < 100 nach 4 min. aufweist.

5. Sandwich-Verbundbauteil (1) nach einem der Ansprüche 1 bis 4, **dadurch gekennzeichnet, dass** die Verstärkungsschicht (20) zwischen der Funktionsschicht (50) und der Kernschicht (10) im Schichtaufbau angeordnet ist und/oder die Verstärkungsschicht (20) einen Faserverbundwerkstoff umfasst, der aus einem vorgefertigten Prepreg, insbesondere einem Prepreg mit Phenolharz-Matrix und Glasfasern, hergestellt ist.

6. Sandwich-Verbundbauteil (1) nach einem der Ansprüche 1 bis 5, **dadurch gekennzeichnet, dass** der Schichtaufbau weiterhin eine Trennschicht (30) umfassend ein thermoplastisches Material, insbesondere ein halogenhaltiges thermoplastisches Material, vorzugsweise eine Fluor-Kunststoff-Lage, besonders bevorzugt eine Lage aus Polyvinylfluorid aufweist, wobei die Trennschicht (30) vorzugsweise zwischen der Verstärkungsschicht (20) und der Funktionsschicht (50) angeordnet ist.

7. Sandwich-Verbundbauteil (1) nach einem der vorstehenden Ansprüche, **dadurch gekennzeichnet, dass** die Funktionsschicht (50) aus einer Aluminiumfolie besteht, insbesondere einer nichttragenden Aluminiumfolie, mit einer Stärke zwischen 7µm und 300pm, bevorzugt zwischen 7µm und 100µm.

8. Sandwich-Verbundbauteil (1) nach einem der vorstehenden Ansprüche, **dadurch gekennzeichnet, dass** die Kernschicht (10) als Hartschaum-Platte oder Hartintegralschaum-Platte vorgefertigt ist.

9. Sandwich-Verbundbauteil (1) nach einem der vorstehenden Ansprüche, **dadurch gekennzeichnet, dass** es ein Flächengewicht < 2,5 kg/m², vorzugsweise ein Flächengewicht < 2 kg/m² aufweist, wobei die Kernschicht (10) vorzugsweise eine Massendichte von 20 bis 300 kg/m³, insbesondere von 40 bis 150 kg/m³, vorzugsweise von 40 bis 100 kg/m³, besonders bevorzugt von 40 bis 80 kg/m³ aufweist.

10. Sandwich-Verbundbauteil (1) nach einem der vorstehenden Ansprüche 1 bis 9, **dadurch gekennzeichnet, dass**
- die Kernschicht (10) aus Polyurethanschaum, insbesondere PUR und/oder PIR, hergestellt ist bzw. besteht; oder dass
- die Kernschicht (10) aus einem PVC-, PET-, EPS-, PE- und/oder PMI-Schaum hergestellt ist.

11. Sandwich-Verbundbauteil (1) nach einem der vorstehenden Ansprüche 1 bis 9, **dadurch gekennzeichnet, dass** die Kernschicht (10) aus einer Kombination von mindestens zwei Schäumen, insbesondere ausgewählt aus: Polyurethan-, PVC-, PET-, EPS-, PE- oder PMI-Schaum, hergestellt ist bzw. besteht.

12. Sandwich-Verbundbauteil (1) nach einem der vorstehenden Ansprüche, **dadurch gekennzeichnet, dass** der Schichtaufbau auf einer Seite der Kernschicht (10) die mindestens eine Funktionsschicht (50) als erste Funktionsschicht und vorzugsweise die Verstärkungsschicht (20) als erste Verstärkungsschicht sowie auf der anderen Seite der Kernschicht (10) eine zweite Funktionsschicht (50) und vorzugsweise eine zweite Verstärkungsschicht (20) aufweist, wobei die erste und die zweite Funktionsschicht (50) aus einer Aluminiumfolie bestehen, die eine geringere Schichtstärke aufweist als die erste Verstärkungsschicht (20), und vorzugsweise die ersten und zweiten Verstärkungsschichten (20) technisch identisch ausgeführt sind.

13. Sandwich-Verbundbauteil (1) nach einem der vorstehenden Ansprüche, **dadurch gekennzeichnet, dass**
- der Schichtaufbau mindestens eine Funktionsschicht (50) aus Metallfolie auf jeder Seite der Kernschicht (10) umfasst; und/oder dass
- die Metallfolie, insbesondere Aluminiumfolie, der Funktionsschicht (50) Perforationen aufweist.

14. Sandwich-Verbundbauteil (1) nach einem der vorstehenden Ansprüche, **dadurch gekennzeichnet, dass** der Schichtaufbau folgende Schichtungsreihenfolge aufweist:
- eine erste Funktionsschicht (50) umfassend eine Aluminiumfolie;
- eine Klebelage (40), vorzugsweise aus einem Duroplast;
- eine erste Trennschicht (30) umfassend eine Thermoplast-Schicht, insbesondere eine Fluor-Kunststoffe-Lage (32), vorzugsweise eine Lage aus Polyvinylfluorid;
- eine erste Verstärkungsschicht (20) aus Faserverbundwerkstoff, insbesondere aus vorgefertigtem Prepreg;
- eine innenliegende, insbesondere zentrale Kernschicht (10) aus Polymerschaum,
- eine zweite Verstärkungsschicht (20) aus Faserverbundwerkstoff, insbesondere aus vorgefertigtem Prepreg;
- eine zweite Trennschicht (30) umfassend eine Thermoplast-Schicht, insbesondere eine Fluor-Kunststoffe-Lage (32), vorzugsweise eine Lage aus Polyvinylfluorid;
- eine Klebelage (40), vorzugsweise aus einem Duroplast;
- eine zweite Funktionsschicht (50) umfassend eine Aluminiumfolie;
wobei diese Schichten des Schichtaufbaus miteinander stoffschlüssig verbunden sind.

15. Innenraum-Verbundpaneel eines Flugzeugs, umfassend oder bestehend aus einem Sandwich-Verbundbauteil (1) nach einem der Ansprüche 1 bis 14.

## Claims

1. Sandwich composite component (1), in particular a composite board, for the interior of a passenger aircraft, comprising a layer structure in a sandwich construction
- having a core layer (10) made of polymer foam;
- having a reinforcing layer (20) comprising fibre composite material; and further
- having at least one functional layer (50);
wherein these layers of the layer structure are substance bonded to each other, in particular by an adhesive bond;
**characterised in that**
the fibre composite material of the reinforcing layer (20) comprises a woven fabric made of fibres or a laid fabric made of fibres, and
**in that** the fibre composite material of the reinforcing layer (20) comprises a polymer matrix that has a higher density than the polymer foam of the core layer (10), and **in that** the at least one functional layer (50) comprises a metal foil, preferably an aluminium foil, that has a smaller layer thickness than the reinforcing layer (20).

2. Sandwich composite component (1) according to claim 1, **characterised in that** the sandwich composite component (1) meets the fire protection requirements for aircraft interior materials according to EASA specification with regard to flammability, smoke density and/or heat release.

3. Sandwich composite component (1) according to claim 1 or 2, **characterised in that** the sandwich composite component (1) meets the requirements according to EASA specification CS 25.853 (d) with regard to heat release and heat release rate, and in particular has a heat release rate HRR of ≤65 kW/m² and a heat release HR of ≤65 kW*min/m², determined according to CS 25.853 (d) and Appendix F, Part IV, wherein the sandwich composite component (1) has particularly preferred an average heat release rate HRR of ≤45 kW/m² and/or particularly preferred an average heat release HR of ≤40 kW*min/m², determined according to CS 25.853 (d) and Appendix F, Part IV.

4. Sandwich composite component (1) according to one of claims 1 to 3, **characterised in that** with regard to smoke emission properties, the sandwich composite component (1) has an average specific optical smoke density Ds of < 100 after 4 min. determined according to ASTM test method F814-83.

5. Sandwich composite component (1) according to one of claims 1 to 4, **characterised in that** the reinforcing layer (20) is arranged between the functional layer (50) and the core layer (10) in the layer structure and/or the reinforcing layer (20) comprises a fibre composite material, which is made from a prefabricated prepreg, in particular a prepreg with a phenolic resin matrix and glass fibres.

6. Sandwich composite component (1) according to one of claims 1 to 5, **characterised in that** the layer structure further comprises a separating layer (30) comprising a thermoplastic material, in particular a halogenated thermoplastic material, preferably a fluoroplastic ply, particularly preferably a ply made of polyvinyl fluoride, wherein the separating layer (30) is arranged preferably between the reinforcing layer (20) and the functional layer (50).

7. Sandwich composite component (1) according to one of the preceding claims, **characterised in that** the functional layer (50) consists of an aluminium foil, in particular a non-structural aluminium foil, having a thickness of between 7 µm and 300 µm, preferably between 7 µm and 100 µm.

8. Sandwich composite component (1) according to one of the preceding claims, **characterised in that** the core layer (10) is prefabricated as a rigid foam board or rigid integral foam board.

9. Sandwich composite component (1) according to one of the preceding claims, **characterised in that** it has a weight per unit area of < 2.5 kg/m², preferably a weight per unit area of < 2 kg/m², wherein the core layer (10) preferably has a density of 20 to 300 kg/m³, in particular of 40 to 150 kg/m³, preferably of 40 to 100 kg/m³ and particularly preferably of 40 to 80 kg/m³.

10. Sandwich composite component (1) according to one of the preceding claims 1 to 9, **characterised in that** the core layer (10) is made from or consists of polyurethane foam, in particular PUR and/or PIR; or
- the core layer (10) is made from a PVC, PET, EPS, PE and/or PMI foam.

11. Sandwich composite component (1) according to one of the preceding claims 1 to 9, **characterised in that** the core layer (10) is made from or consists of a combination of at least two foams, selected in particular from: polyurethane, PVC, PET, EPS, PE or PMI foam.

12. Sandwich composite component (1) according to one of the preceding claims, **characterised in that** the layer structure comprises on one side of the core layer (10) the at least one functional layer (50) as a first functional layer and preferably the reinforcing layer (20) as a first reinforcing layer, and on the other side of the core layer (10) a second functional layer (50) and preferably a second reinforcing layer (20), wherein the first and the second functional layers (50) consist of an aluminium foil, which has a smaller layer thickness than the first reinforcing layer (20), and preferably the first and second reinforcing layers (20) are technically identical.

13. Sandwich composite component (1) according to one of the preceding claims, **characterised in that**
- the layer structure comprises at least one functional layer (50) made of metal foil on each side of the core layer (10); and/or **in that**
- the metal foil, in particular aluminium foil, of the functional layer (50) comprises perforations.

14. Sandwich composite component (1) according to one of the preceding claims, **characterised in that** the layer structure comprises the following layer sequence:
- a first functional layer (50) comprising an aluminium foil;
- an adhesive ply (40), preferably made of a thermoset;
- a first separating layer (30) comprising a thermoplastic layer, in particular a fluoroplastic ply (32), preferably a ply made of polyvinyl fluoride;
- a first reinforcing layer (20) made of fibre composite material, in particular made of prefabricated prepreg;
- an inner, in particular central, core layer (10) made of polymer foam,
- a second reinforcing layer (20) made of fibre composite material, in particular made of prefabricated prepreg;
- a second separating layer (30) comprising a thermoplastic layer, in particular a fluoroplastic ply (32), preferably a ply made of polyvinyl fluoride;
- an adhesive ply (40), preferably made of a thermoset;
- a second functional layer (50) comprising an aluminium foil;
wherein these layers of the layer structure are substance bonded to each other.

15. Interior composite panel of an aircraft, comprising or consisting of a sandwich composite component (1) according to one of claims 1 to 14.

## Revendications

1. Composant composite en sandwich (1), en particulier panneau composite, pour l'intérieur d'un avion de passagers, comprenant une structure de couche en sandwich
- avec une couche centrale (10) en mousse polymère;
- avec une couche de renforcement (20) comprenant un matériau composite à base de fibres; et en outre
- avec au moins une couche fonctionnelle (50);
ces couches de la structure de couche étant reliées entre elles par liaison de matière, en particulier par liaison adhésive; **caractérisé en ce que**
le matériau composite à base de fibres de la couche de renforcement (20) comprend un tissu de fibres ou une nappe de fibres, et **en ce que** le matériau composite à base de fibres de la couche de renforcement (20) comprend une matrice polymère qui présente une densité apparente supérieure à celle de la mousse polymère de la couche centrale (10), et **en ce qu'**au moins une couche fonctionnelle (50) comprend une feuille métallique, de préférence une feuille d'aluminium, qui présente une épaisseur de couche inférieure à celle de la couche de renforcement (20).

2. Composant composite en sandwich (1) selon la revendication 1, **caractérisé en ce que** le composant composite en sandwich (1) satisfait aux exigences de protection contre l'incendie pour les matériaux d'intérieur d'avion selon les spécifications de l'EASA en ce qui concerne l'inflammabilité, la densité des gaz de fumée et/ou la libération de chaleur.

3. Composant composite en sandwich (1) selon la revendication 1 ou 2, **caractérisé en ce que** le composant composite en sandwich (1) satisfait aux exigences de la spécification CS 25.853 (d) de l'EASA en ce qui concerne le dégagement de chaleur et le taux de dégagement de chaleur, et présente en particulier un taux de dégagement de chaleur HRR ≤65 kW/m² et un dégagement de chaleur HR ≤65 kW*min/m² déterminés selon CS 25.853 (d) et l'appendice F, partie IV, le composant composite en sandwich (1) présentant, déterminé selon CS 25.853 (d) et l'appendice F, partie IV, de manière particulièrement préférée un taux de dégagement de chaleur moyen HRR ≤45 kW/m² et/ou de manière particulièrement préférée un dégagement de chaleur moyen HR ≤40 kW*min/m².

4. Composant composite en sandwich (1) selon l'une des revendications 1 à 3, **caractérisé en ce que** le composant composite en sandwich (1) présente, en ce qui concerne les propriétés d'émission de fumée, déterminées selon la méthode d'essai ASTM F814-83, une densité optique moyenne des fumées Ds < 100 après 4 min.

5. Composant composite en sandwich (1) selon l'une des revendications 1 à 4, **caractérisé en ce que** la couche de renforcement (20) est disposée entre la couche fonctionnelle (50) et la couche centrale (10) dans la structure de couche, et/ou la couche de renforcement (20) comprend un matériau composite à base de fibres, qui est fabriqué à partir d'un préimprégné préfabriqué, en particulier un préimprégné avec une matrice de résine phénolique et des fibres de verre.

6. Composant composite en sandwich (1) selon l'une des revendications 1 à 5, **caractérisé en ce que** la structure de couche comprend en outre une couche de séparation (30) comprenant un matériau thermoplastique, en particulier un matériau thermoplastique halogéné, de préférence une couche fluoroplastique, de préférence une couche de fluorure de polyvinyle, la couche de séparation (30) étant de préférence disposée entre la couche de renforcement (20) et la couche fonctionnelle (50) .

7. Composant composite en sandwich (1) selon l'une des revendications précédentes, **caractérisé en ce que** la couche fonctionnelle (50) est constituée d'une feuille d'aluminium, notamment d'une feuille d'aluminium non porteuse, d'épaisseur comprise entre 7µm et 300pm, de préférence entre 7µm et 100pm.

8. Composant composite en sandwich (1) selon l'une des revendications précédentes, **caractérisé en ce que** la couche centrale (10) est préfabriquée sous la forme d'un panneau en mousse dure ou d'un panneau en mousse intégrale dure.

9. Composant composite en sandwich (1) selon l'une des revendications précédentes, **caractérisé en ce qu'**il présente un poids surfacique < 2,5 kg/m², de préférence un poids surfacique < 2 kg/m², la couche centrale (10) présentant de préférence une densité massique de 20 à 300 kg/m³, en particulier de 40 à 150 kg/m³, de préférence de 40 à 100 kg/m³, de manière particulièrement préférée de 40 à 80 kg/m³.

10. Composant composite en sandwich (1) selon l'une des revendications 1 à 9 précédentes, **caractérisé en ce que**
- la couche centrale (10) est fabriquée ou se compose de mousse de polyuréthane, en particulier de PUR et/ou de PIR; ou que
- la couche centrale (10) est fabriquée à partir d'une mousse de PVC, de PET, d'EPS, de PE et/ou de PMI.

11. Composant composite en sandwich (1) selon l'une des revendications 1 à 9 précédentes, **caractérisé en ce que** la couche centrale (10) est constituée d'une combinaison d'au moins deux mousses, en particulier choisies parmi: mousse de polyuréthane, de PVC, de PET, d'EPS, de PE ou de PMI.

12. Composant composite en sandwich (1) selon l'une des revendications précédentes, **caractérisé en ce que** la structure de couche présente, d'un côté de la couche centrale (10), ladite au moins une couche fonctionnelle (50) en tant que première couche fonctionnelle et, de préférence, la couche de renforcement (20) en tant que première couche de renforcement, ainsi que, de l'autre côté de la couche centrale (10), une deuxième couche fonctionnelle (50) et, de préférence, une deuxième couche de renforcement (20), la première et la deuxième couche fonctionnelle (50) étant constituées d'une feuille d'aluminium qui présente une épaisseur de couche inférieure à celle de la première couche de renforcement (20), et de préférence les première et deuxième couches de renforcement (20) étant réalisées de manière techniquement identique.

13. Composant composite en sandwich (1) selon l'une des revendications précédentes, **caractérisé en ce que**
- la structure de couche comprend au moins une couche fonctionnelle (50) en feuille métallique de chaque côté de la couche centrale (10); et/ou **en ce que**
- la feuille métallique, en particulier la feuille d'aluminium, de la couche fonctionnelle (50) présente des perforations.

14. Composant composite en sandwich (1) selon l'une des revendications précédentes, **caractérisé en ce que** la structure de couche présente l'ordre de couche suivant:
- une première couche fonctionnelle (50) comprenant une feuille d'aluminium;
- une couche adhésive (40), de préférence en résine thermodurcissable;
- une première couche de séparation (30) comprenant une couche de thermoplastique, en particulier une couche fluoroplastique (32), de préférence une couche de fluorure de polyvinyle;
- une première couche de renforcement (20) en matériau composite fibreux, en particulier en préimprégné préfabriqué;
- une couche interne (10), notamment centrale, en mousse de polymère,
- une deuxième couche de renforcement (20) en matériau composite fibreux, en particulier en préimprégné préfabriqué;
- une deuxième couche de séparation (30) comprenant une couche de thermoplastique, en particulier une couche fluoroplastique (32), de préférence une couche de fluorure de polyvinyle;
- une couche adhésive (40), de préférence en une matière thermodurcissable;
- une deuxième couche fonctionnelle (50) comprenant une feuille d'aluminium;
ces couches de la structure de couche étant reliées entre elles par liaison de matière.

15. Panneau composite pour l'intérieur d'un avion, comprenant ou constitué d'un composant composite en sandwich (1) selon l'une quelconque des revendications 1 à 14.
